# EUROPEAN PATENT SPECIFICATION

(11) **EP 3 171 061 B1**
(45) Date of publication and mention of the grant of the patent: **10.04.2019**
(21) Application number: 16193252.0
(22) Date of filing: 11.10.2016
(51) Int. Cl.: F16K 27/00, F16K 31/06

(54) **VALVE BLOCK, FLUID MACHINE, AND RENEWABLE-ENERGY POWER GENERATING APPARATUS**
VENTILBLOCK, FLUIDMASCHINE UND VORRICHTUNG ZUR ERZEUGUNG VON ERNEUERBARER ENERGIE
BLOC DE VANNE, MACHINE À FLUIDE ET APPAREIL DE GÉNÉRATION D'ÉNERGIE À ÉNERGIE RENOUVELABLE

(30) Priority: 17.11.2015 JP 2015224718
(43) Date of publication of application: 24.05.2017
(73) Proprietor: Mitsubishi Heavy Industries, Ltd., Tokyo 108-8215 (JP)
(72) Inventor: Kawabata, Shinji, Tokyo, 108-8215 (JP); Shimizu, Masayuki, Tokyo, 108-8215 (JP); Watanabe, Daigo, Tokyo, 108-8215 (JP)
(74) Representative: Henkel, Breuer & Partner

(56) References cited:
- JP-A- 2014 163 377

## Description

### TECHNICAL FIELD

The present disclosure relates to a valve block, a fluid machine, and a renewable-energy power generating apparatus.

### BACKGROUND ART

A fluid machine such as a hydraulic machine may include a valve block that is removable from a casing.

For instance, JP 2014-163377 A discloses a hydraulic machine which includes a valve block including a valve-block body portion with a housing chamber for housing a valve, and a valve-block connecting portion receiving the valve-block body portion and fixed to a cylinder block having a cylinder formed thereon. In the valve block, the valve-block body portion has a cylindrical portion provided coaxially with the cylinder, and a screw thread (male thread) is formed partially on an outer peripheral surface of the cylindrical portion. A screw hole to be mated with the screw thread is formed on the valve-block connecting portion. With the screw thread and the screw hole screwed together, the valve-block body portion and the valve-block connecting portion are joined, the valve-block body portion being fixed to the valve block, and the valve-block body portion being fixed to the cylinder block via the valve-block connecting portion.

### SUMMARY

Meanwhile, in the valve block disclosed in JP 2014-163377 A, the valve-block body portion (casing) has a cantilever structure where the valve-block body portion is joined by screwing to the valve-block connecting portion (valve-block body) only at a part of the outer peripheral surface of the cylindrical portion. In other words, a section between the joined portion and a working chamber (the cylinder) is not joined to any other member, thus being a free end supported at the boundary to the joined portion.

The present inventors conducted researches and found that a valve block with such a cantilever structure may develop fretting at the free end section. Specifically, in a valve block having the above described cantilever structure, a free end section disposed closer to a working chamber within a casing is exposed to a bending moment generated due to a pressure of the working chamber, and thus may deform. If the pressure of the working chamber changes periodically, the bending moment changes with the pressure change, and the bending deformation repetitively occurs at the free end section, which may eventually lead to occurrence of fretting between the free end section of the valve casing and the valve-block body.

However, JP 2014-163377 A does not explicitly disclose the risk of occurrence of fretting between the valve-block body and the valve casing, nor a countermeasure thereto.

In view of the above issue, an object of at least one embodiment of the present invention is to provide a valve block whereby it is possible to reduce fretting.
(1) A valve block according to the present invention includes the features of claim 1. The valve block comprises: a valve configured to be capable of opening and closing in accordance with a periodic change of a pressure of a working chamber of a fluid machine; a valve-block body; a valve casing disposed at least partially inside a hole formed in the valve-block body, and including a housing space for the valve and a flange portion protruding outward in a radial direction of the hole; and a fastening part configured to fasten the flange portion of the valve casing to the valve-block body. Furthermore, d/R is at least 0.04% at a position closer to the working chamber than the flange portion in an axial direction of the hole, where d is a clearance between an inner peripheral surface of the hole of the valve-block body and an outer peripheral surface of the valve casing, and R is a radius of the hole.
   With the above configuration (1), in the valve casing, at a position closer to the working chamber than the flange portion is in the axial direction of the hole of the valve-block body (hereinafter, also referred to as simply "axial direction"), the clearance d between the inner peripheral surface of the hole and the outer peripheral surface of the valve casing is ensured to be adequately large in relation to the radius R of the hole. Accordingly, at a position closer to the working chamber than the flange portion, even if the valve casing (i.e., the free end section of the cantilever structure of the valve casing supported at the flange portion) deforms due to a bending moment generated by a pressure of the working chamber, the outer peripheral surface of the valve casing and the inner peripheral surface of the hole of the valve-block body are less likely to be in contact with each other. Accordingly, with the above configuration (1), the clearance d between the inner peripheral surface of the hole of the valve-block body and the outer peripheral surface of the valve casing is ensured to be adequately large in relation to the radius R of the hole, and thereby it is possible to reduce fretting between the valve-block body and the valve casing.
(2) In some embodiments, in the above configuration (1), the clearance d is at least 20µm at a position closer to the working chamber than the flange portion in an axial direction of the hole.
   If the pressure condition of the working chamber and the size of the valve casing are those of a typical fluid machine as a precondition, an effect to suppress fretting can be sufficiently achieved with the clearance d being approximately 20µm at a position closer to the working chamber than the flange portion is.
   Accordingly, with the above configuration (2), it is possible to reduce fretting between the valve-block body and the valve casing effectively with the clearance d of at least 20µm.
(3) Furthermore, in some embodiments, in the above configuration (1) or (2), the clearance d is greater than an amount of elastic deformation of the valve casing in the radial direction due to pressure change in the working chamber during operation of the fluid machine.
   With the above configuration (3), the clearance d is larger than the amount of elastic deformation in the radial direction of the valve casing due to pressure change of the working chamber, and thereby it is possible to reduce fretting between the valve-block body and the valve casing effectively.
(4) According to the present invention, a surface closer to the working chamber, of both end surfaces of the flange portion, is in contact with an outer surface of the valve-block body disposed on an outer circumferential surface of the hole. The fastening part includes a plurality of fastening bolts to be screwed into a plurality of respective screw holes formed so as to surround the hole on the outer surface of the valve block body and to fix the flange portion to the outer surface of the valve-block body.
   With the above configuration (4), the plurality of fastening bolts are screwed into the screw holes formed on the outer surface of the valve-block body so as to surround the hole, and thereby the flange portion is fixed to the outer surface. Accordingly, it is possible to apply a relatively large axial force to the outer surface of the valve-block body with a relatively small fastening force, and thereby it is possible to suppress loosening of the fastening part for fastening the valve casing and the valve-block body portion even in a case where the pressure of the working chamber becomes relatively high.
(5) In some embodiments, in the above configuration (4), the valve casing comprises a cylindrical portion disposed closer to the working chamber than the flange portion and connected to the flange portion, the cylindrical portion forming at least a part of the housing space of the valve. A ratio (t2/t1) of a thickness t2 in the axial direction of the flange portion to a thickness t1 in the radial direction of the cylindrical portion is at least1.5 and no more than 10.
   With the above configuration (5), the ratio (t2/t1) of the thickness t2 of the flange portion in the axial direction to the thickness t1 of the cylindrical portion of the valve casing in the radial direction is at least 1.5, and thereby it is possible to form the flange portion with a relatively large thickness to improve rigidity of the valve block as a whole, while forming the cylindrical portion with a relatively small thickness to ensure the housing space for the low-pressure valve. Further, with the ratio (t2/t1) being at least 1.5, it is possible to increase the length of the fastening bolts, and thereby it is possible to suppress loosening of the fastening part for fastening the valve casing and the valve-block body, and to improve fatigue strength of the fastening bolts. With the above configuration (5), the ratio (t2/t1) of the thickness t2 of the flange portion in the axial direction to the thickness t1 of the valve casing in the radial direction is no more than 10, and thereby it is possible to suppress size increase of the valve block.
(6) In some embodiments, in the above configuration (4) or (5), an initial fastening force of the plurality of fastening bolts is set so that the surface of the flange portion does not separate from the outer surface of the valve-block body due to pressure change of the working chamber during operation of the fluid machine.
   With the above configuration (6), the fastening part is fastened with a sufficient initial fastening force, and thereby it is possible to suppress separation of the surface closer to the working chamber of the flange portion from the outer surface of the valve-block body, even during operation of the fluid machine.
(7) In some embodiments, in any one of the above configurations (4) to (6), the valve block is configured such that an external device is mountable to the valve block by using at least one of the plurality of fastening bolts.
   With the above configuration (7), it is possible to mount an external device by using at least one of the plurality of fastening bolts, and thereby it is possible to save space for mounting an external device as compared to a case where a fastening member is additionally provided to mount an external device, and thus to reduce the size of the hydraulic machine.
(8) In some embodiments, in any one of the above configurations (1) to (7), a section of the valve casing to be received in the hole of the valve-block body in the axial direction has such a diameter that a difference between a maximum diameter and a minimum diameter is at most 500µm.
   With the above configuration (8), a section of the valve casing to be received by the hole has such a diameter that the difference between the maximum value and the minimum value of the diameter is no more than 500µm, and thereby it is possible to insert the section of the valve casing into the hole of the valve-block body smoothly in the axial direction.
(9) In some embodiments, in any one of the above configurations (1) to (8), the hole of the valve-block body has such a diameter that a difference between a maximum diameter and a minimum diameter is at most 500µm.
   With the above configuration (9), the hole of the valve-block body has such a diameter that the difference between the maximum value and the minimum value of the diameter is no more than 500µm, and thereby it is possible to insert the valve casing into the hole of the valve-block body smoothly in the axial direction.
(10) In some embodiments, in any one of the above configurations (1) to (9), at least one of a section of the valve casing to be received in the hole of the valve-block body in the axial direction, or a section of the hole of the valve-block body to receive the valve casing in the axial direction has a constant diameter within a tolerance.
   With the above configuration (10), at least one of a section of the valve casing to be received by the hole of the valve-block body in the axial direction, or a section of the hole of the valve-block body that receives the valve casing in the axial direction has a constant diameter within a range of tolerance, and thereby it is possible to insert the valve casing into the hole of the valve-block body in the axial direction.
(11) In some embodiments, in any one of the above configurations (1) to (10), the valve block further comprises a push-up bolt to be mated with a female thread formed on the flange portion and configured to push up the flange portion in a direction away from the valve-block body by being screwed into the female thread.
   With the above configuration (11), by screwing the push-up bolt to be mated with the female thread formed on the flange portion, it is possible to push up the flange portion in a direction away from the valve-block body, and thereby it is possible to remove the valve casing and the valve received in the valve casing readily from the valve-block body.
(12) In some embodiments, in any one of the above configurations (1) to (11), the flange portion includes a cut-out shape so as not to interfere with a constituent member mounted to the valve-block body or the valve casing.
   With the above configuration (12), the flange portion has a cut-out shape that enables the flange portion to avoid interference with a constituent member mounted to the valve-block body or the valve casing, and thereby it is possible to mount constituent members to the valve-block body or the valve casing smoothly.
(13) In some embodiments, in any one of the above configurations (1) to (12), the valve comprises: a rod having a first end portion and a second end portion; a valve-body unit joined to the first end portion of the rod and having at least a valve body capable of being in contact with a valve seat formed on the valve casing; an armature joined to the second end portion of the rod; a biasing member configured to bias the armature in a biasing direction; and an electromagnet configured to attract the armature to drive the armature in a direction opposite to the biasing direction when supplied with electric power. The valve casing comprises: an inner channel for permitting the working chamber and an external piping to be in communication when the valve is open; a rod insertion hole through which the second end portion of the rod is capable of passing; and an electromagnet housing space for housing the electromagnet.
   With the above configuration (13), in the valve block including the valve casing receiving the solenoid valve that can be controlled to open and close by controlling supply of electric power to the electromagnet, the clearance d between the inner peripheral surface of the hole of the valve-block body and the outer peripheral surface of the valve casing is adequately large in relation to the radius R of the hole, and thereby it is possible to reduce fretting between the valve-block body and the valve casing .
(14) A fluid machine according to at least one embodiment of the present invention comprises: a cylinder; a piston configured to be capable of reciprocating inside the cylinder; and the valve block according to any one of the above (1) to (13). The working chamber is defined by the cylinder and the piston. The valve is configured to be capable of switching inflow of a fluid to the working chamber or outflow of a fluid from the working chamber.
   With the above configuration (14), in the valve casing, at a position closer to the working chamber than the flange portion is in the axial direction of the hole of the valve-block body (hereinafter, also referred to as simply "axial direction"), the clearance d between the inner peripheral surface of the hole and the outer peripheral surface of the valve casing is ensured to be adequately large in relation to the radius R of the hole. Accordingly, at a position closer to the working chamber than the flange portion is, even if the valve casing (i.e., the free end section of the cantilever structure of the valve casing supported at the flange portion) deforms due to a bending moment generated by a pressure of the working chamber, the outer peripheral surface of the valve casing and the inner peripheral surface of the hole of the valve-block body are less likely to be in contact with each other. Accordingly, with the above configuration (14), the clearance d between the inner peripheral surface of the hole of the valve-block body and the outer peripheral surface of the valve casing is ensured to be adequately large in relation to the radius R of the hole, and thereby it is possible to reduce fretting between the valve-block body and the valve casing.
(15) A renewable energy power generating apparatus according to at least one embodiment of the present invention comprises: a rotor configured to receive renewable energy to rotate; a hydraulic pump configured to be driven by the rotor to pressurize working oil; a hydraulic motor configured to be driven by the working oil pressurized by the hydraulic pump; a high-pressure line connecting an outlet of the hydraulic pump and an inlet of the hydraulic motor; a low-pressure line connecting an outlet of the hydraulic motor and an inlet of the hydraulic pump; and a generator configured to be driven by the hydraulic motor. At least one of the hydraulic pump or the hydraulic motor is the fluid machine according to the above (14), and the valve is configured to be capable of switching a communication state between the working chamber and the high-pressure line or the low-pressure line.

With the above configuration (15), in the valve casing, at a position closer to the working chamber than the flange portion in the axial direction of the hole of the valve-block body (hereinafter, also referred to as simply "axial direction"), the clearance d between the inner peripheral surface of the hole and the outer peripheral surface of the valve casing is ensured to be adequately large in relation to the radius R of the hole. Accordingly, at a position closer to the working chamber than the flange portion is, even if the valve casing (i.e., the free end section of the cantilever structure of the valve casing supported at the flange portion) deforms due to a bending moment generated by a pressure of the working chamber, the outer peripheral surface of the valve casing and the inner peripheral surface of the hole of the valve-block body are less likely to be in contact with each other. Accordingly, with the above configuration (15), the clearance d between the inner peripheral surface of the hole of the valve-block body and the outer peripheral surface of the valve casing is ensured to be adequately large in relation to the radius R of the hole, and thereby it is possible to reduce fretting between the valve-block body and the valve casing.

According to at least one embodiment of the present invention, provided is a valve block whereby it is possible to reduce fretting.

### BRIEF DESCRIPTION OF DRAWINGS

FIG. 1 is a schematic diagram of a wind turbine power generating apparatus according to an embodiment.
FIG. 2 is a schematic configuration diagram of a fluid machine (hydraulic motor) according to an embodiment.
FIG. 3 is a schematic cross-sectional view of a configuration of a valve block according to an embodiment.
FIG. 4 is a schematic cross-sectional view of a configuration of a part of a valve block according to an example for describing the features of the present invention.
FIG. 5 is a partial enlarged view of the valve block depicted in FIG. 4.
FIG. 6 is a schematic cross-sectional view of a configuration of a part of a valve block according to an embodiment.
FIG. 7 is a partial enlarged view of the valve block depicted in FIG. 6.
FIG. 8 is a diagram for describing uplift of the flange portion by a push-up bolt according to an embodiment.
FIG. 9 is a perspective view of a valve block according to an embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

First, an overall configuration of a wind turbine power generating apparatus will be described, which includes a hydraulic motor (fluid machine) including a valve block according to an embodiment.

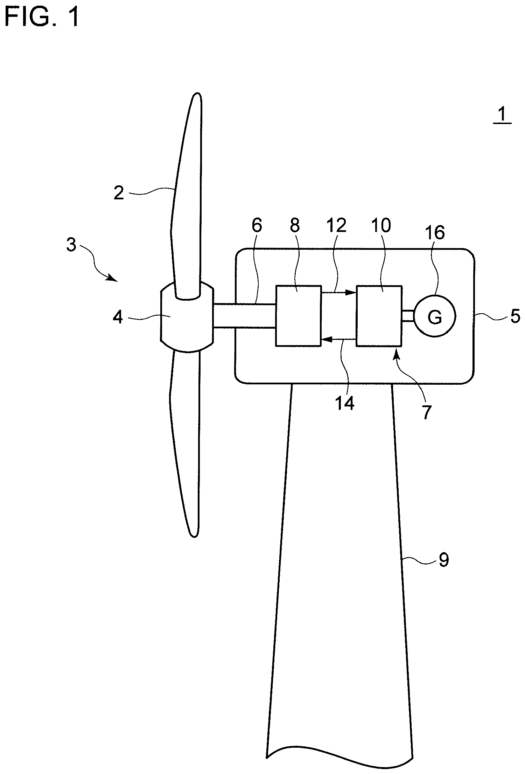

FIG. 1 is a schematic diagram of a wind turbine power generating apparatus according to an embodiment. As depicted in the drawing, a wind turbine power generating apparatus 1 includes a rotor 3 including at least one blade 2 and a hub 4.

In an embodiment, a hydraulic pump 8 is coupled to the rotor 3 via a rotor shaft 6. A hydraulic motor 10 is connected to the hydraulic pump 8 via a high-pressure line 12 and a low-pressure line 14. Specifically, an outlet of the hydraulic pump 8 is connected to an inlet of the hydraulic motor 10 via the high-pressure line 12, and an inlet of the hydraulic pump 8 is connected to an outlet of the hydraulic motor 10 via the low-pressure line 14.

In the wind turbine power generating apparatus 1 depicted in FIG. 1, the rotor 3 receives wind energy, which is a renewable energy, to rotate together with the rotor shaft 6. The hydraulic pump 8 is driven by the rotor 3 via the rotor shaft 6 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. The low-pressure working oil having performed work in the hydraulic motor 10 is returned again to the hydraulic pump 8 via the low-pressure line 14 disposed between the outlet of the hydraulic motor 10 and the inlet of the hydraulic pump 8.

A generator 16 is connected to the hydraulic motor 10 and is configured to be driven by the hydraulic motor 10. In an embodiment, the generator 16 is a synchronous generator connected to a utility grid and driven by the hydraulic motor 10.

Specifically, rotational energy of the rotor 3 is inputted into the generator 16 via the hydraulic transmission 7 including the hydraulic pump 8 and the hydraulic motor 10, and electric power is generated by the generator 16.

At least a part of the rotor shaft 6 is covered by a nacelle 5 disposed on a tower 9. In an embodiment, the hydraulic pump 8, the hydraulic motor 10, and the generator 16 are disposed inside the nacelle 5.

At least one of the hydraulic pump 8 or the hydraulic motor 10 is a fluid machine described below. In the following description, the hydraulic motor 10 will be described as an example of a fluid machine according to an embodiment.

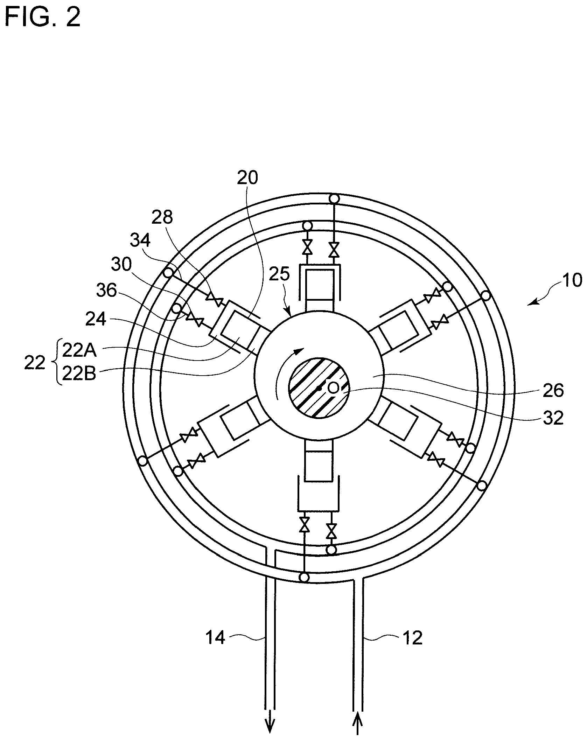

FIG. 2 is a schematic configuration diagram of a fluid machine (hydraulic motor 10) according to an embodiment. As depicted in the drawing, the hydraulic motor 10 includes a rotational shaft 32, a cylinder 20, a piston 22 defining a working chamber 24 together with the cylinder 20, a high-pressure valve 28 and a low-pressure valve 30 provided for the working chamber, and a conversion mechanism 25.

The conversion mechanism 25 is for converting motion between rotational motion of the rotational shaft 32 and reciprocal motion of the piston 22, and includes a cam 26 that has a cam curved surface to contact the piston 22.

The piston 22 preferably includes a piston body part 22A which slides inside the cylinder 20, and a piston roller or a piston shoe which is attached to the piston body part 22A and which contacts the cam curved surface of the cam 26, for the sake of smooth conversion of reciprocating motion of the piston 22 into rotational motion of the rotational shaft 32. In the example illustrated in FIG. 2, the piston 22 includes a piston body part 22A and a piston shoe 22B.

In the hydraulic motor 10 depicted in FIG. 2, the cam 26 is an eccentric cam disposed eccentrically from the axial center O of the rotational shaft (crank shaft) 32 of the hydraulic motor 10. While the cam 26 and the rotational shaft 32 to which the cam 26 is mounted perform one revolution, the piston 22 performs a set of upward and downward movement.

In another embodiment, the cam 26 is an annular-shaped multi-lobed cam (ring cam) with a plurality of lobes. In this case, while the cam 26 and the rotational shaft 32 to which the cam 26 is mounted perform one revolution, the piston 22 performs as many sets of upward and downward movement as the number of lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

A fluid machine (hydraulic motor 10) further includes a valve block described below, and at least one of the high-pressure valve 28 or the low-pressure valve 30 is a valve according to the present invention and is housed in a valve casing that constitutes a valve block.

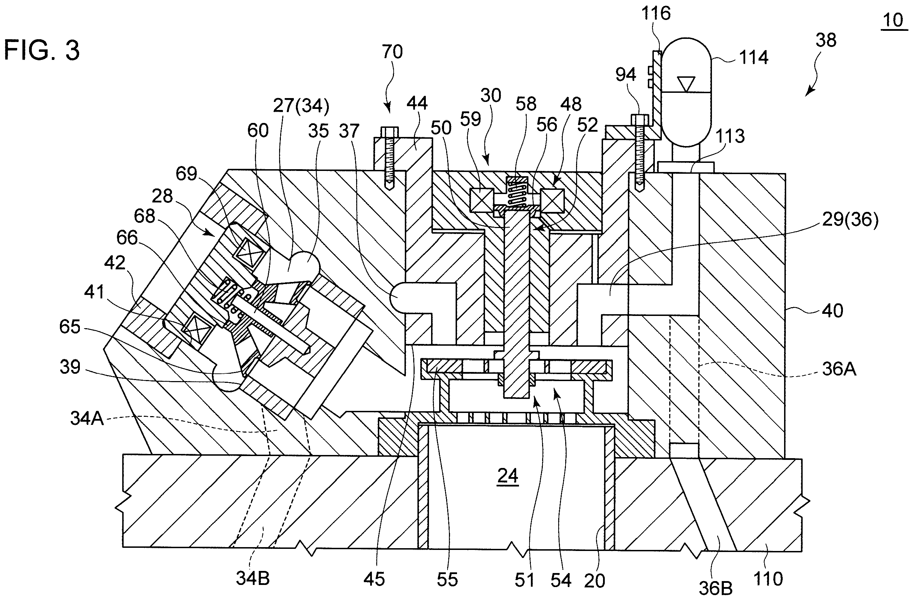

FIG. 3 is a schematic cross-sectional view of a configuration of a valve block of a fluid machine (hydraulic motor 10) according to an embodiment. As depicted in the drawing, the valve block 38 includes a valve-block body 40, a high-pressure valve 28 and a low-pressure valve 30, valve casings 42, 44 housing the high-pressure valve 28 and the low-pressure valve 30 respectively, and a fastening part 70 for fastening the valve casings 42, 44 and the valve-block body 40. FIG. 3 is a view where the high-pressure valve 28 is closed and the low-pressure valve 30 is open.

The valve-block body 40 has holes 41, 43 formed thereon to receive the valve casings 42, 44, and the fastening part 70 is configured to fasten the valve casings 42, 44 housed in the holes 41, 43 to the valve-block body. The fastening part 70 will be described below.

The valve-block body 40 is connected to a cylinder block 110 including a cylinder 20 formed thereon, with a non-depicted bolt, for instance. Accordingly, the valve block 38 including the valve-block body 40, the valve casings 42, 44, etc. is fixed to the cylinder block 110.

At least one of the high-pressure valve 28 or the low-pressure valve 30 is configured to be capable of opening and closing in accordance with the periodic change of the pressure of the working chamber 24 of the fluid machine (hydraulic motor 10).

More specifically, the high-pressure valve 28 depicted in FIG. 3 is a solenoid valve including a rod 60, a valve-body unit 64 and an armature 66 joined to the rod 60, a spring (biasing member) 68 for biasing the armature 66, and an electromagnet 69 for driving the armature 66. The valve-body unit 64 includes a valve body 65 disposed on the opposite side of a valve seat 39 formed on the valve casing 42 from the working chamber 24, and capable of being in contact with the valve seat 39. The armature 66 is configured to be biased in a biasing direction by the spring 68. The electromagnet 69 is configured to attract the armature 66 to drive the armature 66 in a direction opposite to the biasing direction, when supplied with electric power.

Furthermore, the valve casing 42 housing the high-pressure valve 28 includes a high-pressure inner channel 27 (inner channel) constituting the above described high-pressure communication line 34 formed thereon.

The high-pressure communication line 34 includes the above described high-pressure inner channel 27, and a valve-block high-pressure channel 34A and a cylinder-block high-pressure channel 34B connected to each other. The high-pressure inner channel 27 extends along the circumferential direction of the valve casing 42 in the valve-block body 40, and is connected to the valve-block high-pressure channel 34A via a high-pressure annular channel 35 formed so as to surround the valve casing 42. The high-pressure communication line 34 including the high-pressure inner channel 27 is disposed so that the working chamber 24 and the high-pressure line 12 (external piping) are in communication with each other when the high-pressure valve 28 is open.

The high-pressure valve 28 is a poppet-type solenoid valve of normally-closed type, configured to be capable of switching the communication state between the working chamber 24 and the high-pressure line 12 (see FIG. 2) by movement of the valve-body unit 64 due to an electromagnetic force of the electromagnet 69 or a biasing force of the spring 68.

Furthermore, the low-pressure valve 30 depicted in FIG. 3 is a solenoid valve including a rod 50, a valve-body unit 54 and an armature 56 joined to the rod 50, a spring (biasing member) 58 for biasing the armature 56, and an electromagnet 59 for driving the armature 56. The valve-body unit 54 includes a valve body 55 joined to the first end portion 51 of the rod 50, disposed on the same side of the valve seat 45 formed on the valve casing 44 as the working chamber 24, and capable of being in contact with the valve seat 45. The armature 56 is joined to the second end portion 52 of the rod 50, and configured to be biased in a biasing direction by the spring 58. The electromagnet 59 is configured to attract the armature 56 to drive the armature 56 in a direction opposite to the biasing direction, when supplied with electric power.

Furthermore, the valve casing 44 housing the low-pressure valve 30 includes a low-pressure inner channel (inner channel) 29 constituting the above described low-pressure communication line 36, a rod insertion hole 46 through which the second end portion 52 of the rod 50 can pass, and an electromagnet housing space 48 for housing the electromagnet 59.

The low-pressure communication line 36 includes the above described low-pressure inner channel 29, and a valve-block low-pressure channel 36A and a cylinder-block low-pressure channel 36B connected to each other. The low-pressure inner channel 29 extends along the circumferential direction of the valve casing 44 in the valve-block body 40, and is connected to the valve-block low-pressure channel 36A via a low-pressure annular channel 37 formed so as to surround the valve casing 44. The low-pressure communication line 36 including the low-pressure inner channel 29 is disposed so that the working chamber 24 and the low-pressure line 14 (external piping) communicate with each other when the low-pressure valve 30 is open.

The low-pressure valve 30 is a poppet-type solenoid valve of normally-open type, configured to be capable of switching the communication state between the working chamber 24 and the low-pressure line 14 (see FIG. 2) by movement of the armature 56 and the valve-body unit 54 due to an electromagnetic force of the electromagnet 59 or a biasing force of the spring 58.

In some embodiments, the high-pressure valve 28 and the low-pressure valve 30 are controlled to open and close by control signals from a non-depicted controller.

For instance, when the high-pressure valve 28 is not excited by a control signal from the controller, the armature 66 and the valve-body unit 64 are biased toward the valve seat 39 by the spring 68, and retained in a valve-closed position (position depicted in FIG. 3) where the working chamber 24 and the high-pressure line 12 are not in communication. When the high-pressure valve 28 is excited by a control signal from the controller, the armature 66 and the valve-body unit 64 move to a valve-open position where the working chamber 24 and the high-pressure line 12 are in communication with each other by the electromagnetic force, against the biasing force of the spring 68.

Further, for instance, when the low-pressure valve 30 is not excited by a control signal from the controller, the armature 56 and the valve-body unit 54 are biased in a direction away from the valve seat 45 by the spring 58, and retained in a valve-open position (position depicted in FIG. 3) where the working chamber 24 and the low-pressure line 14 are in communication. When the low-pressure valve 30 is excited by a control signal from the controller, the electromagnetic force of the electromagnet 59 attracts the armature 56 and the valve-body unit 54 moves toward the valve seat 45 by the electromagnetic force against the biasing force of the spring 58, to a valve-closed position where the working chamber 24 and the high-pressure line 12 are not in communication with each other.

The fluid machine (hydraulic motor 10) depicted in FIG. 3 further includes a low-pressure accumulator 114 connected to the cylinder-block low-pressure channel 36B via a port 113. The low-pressure accumulator 114 depicted in FIG. 3 is supported on the valve block 38 via a mounting plate 116.

In some embodiments, the low-pressure accumulator 114 may be connected to the cylinder-block low-pressure channel 36B.

In some embodiments, the fluid machine (hydraulic motor 10) may further include a high-pressure accumulator (not depicted) connected to the cylinder-block high-pressure channel 34B or the valve-block high-pressure channel 34A.

The low-pressure accumulator 114 and the high-pressure accumulator function to suppress pressure change (pulsation) of a working fluid, and thereby it is possible to operate the fluid machine (hydraulic motor 10) more stably.

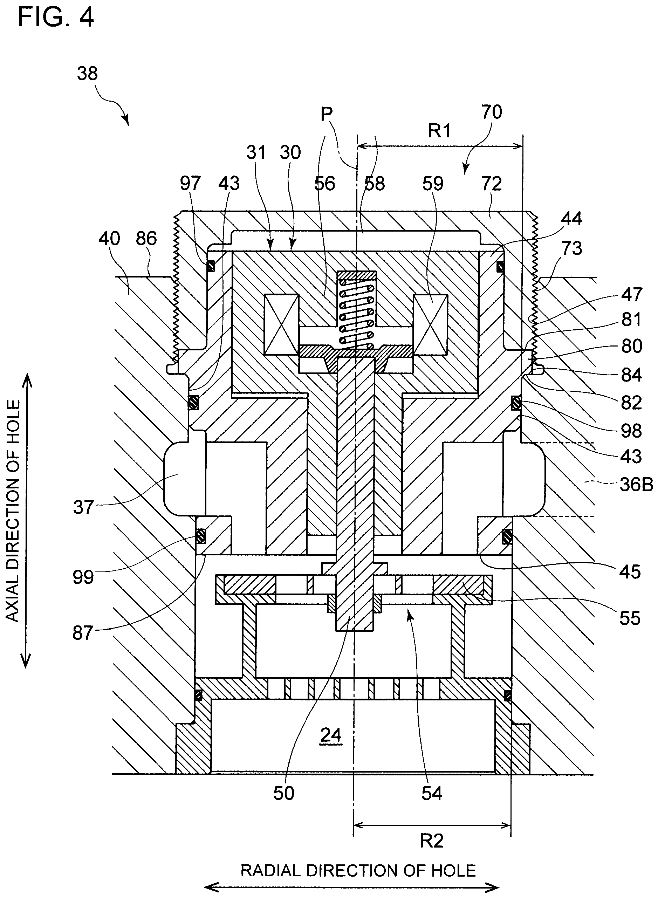

Next, with reference to FIGs. 4 to 9, a part of the valve block 38 will now be described. While the following description describes the valve block 38 including the valve casing 44 housing the low-pressure valve 30, the present invention is not limited to this and also can be applied to a valve block including the valve casing 42 housing the high-pressure valve 28.

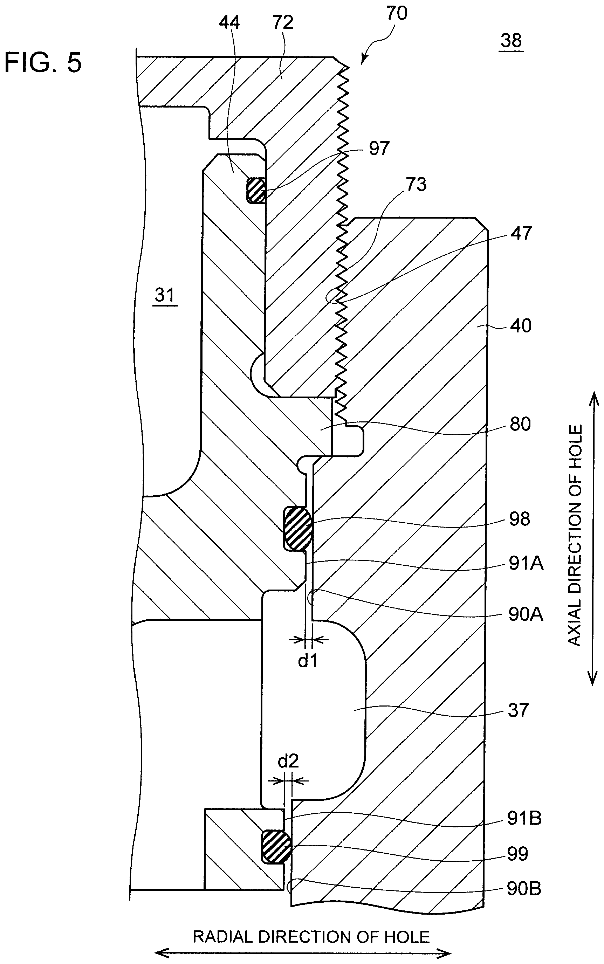

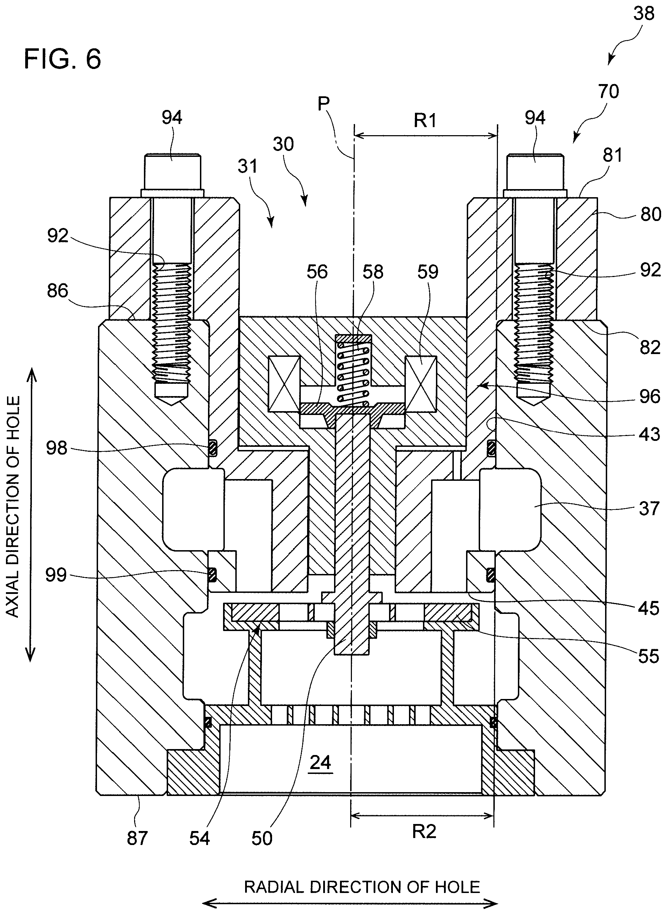

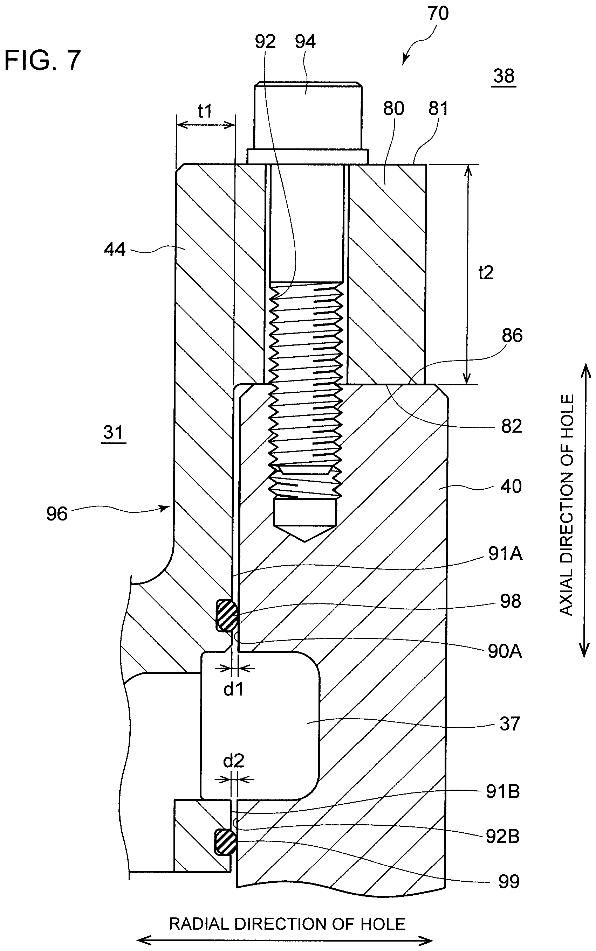

FIGs. 4 and 6 are each a schematic cross-sectional view of a configuration of a part of a valve block according to an example and to an embodiment. FIGs. 5 and 7 are each a partial enlarged view of the valve block depicted in FIGs. 4 and 6. The valve block 38 depicted in FIG. 3 has the same configuration as the valve block 38 depicted in FIGs. 6 and 7.

In the valve block 38 depicted in FIGs. 4 to 7, the valve casing 44 is disposed partially inside the hole 43 formed in the valve-block body 40. The valve casing 44 has a valve housing space 31, and the low-pressure valve 30 is disposed inside the valve housing space 31. Furthermore, the valve casing 44 includes a flange portion 80 protruding outward in a radial direction of the hole 43 (hereinafter, also referred to as simply "radial direction").

The fastening part 70 fastens the flange portion 80 to the valve-block body 40, and thereby fastens the valve casing 44 at least partially received in the hole 43 to the valve-block body.

In some embodiments, d/R is at least 0.04% at a position closer to the working chamber 24 than the flange portion 80 is in an axial direction of the hole 43 (i.e., a direction of the center axis P of the hole 43, also referred to as simply "axial direction" hereinafter), where d is the clearance between an inner peripheral surface 90 of the hole 43 of the valve-block body 40 and an outer peripheral surface 91 of the valve casing 44, and R is the radius of the hole 43 of the valve-block body 40.

Each of the radius R of the hole 43 and the clearance d between the inner peripheral surface 90 of the hole 43 of the valve-block body 40 and the outer peripheral surface 91 of the valve casing 44 may be constant in the axial direction, or may be different depending on the position in the axial direction.

In FIGs. 4 and 5, and FIGs. 6 and 7, R1 in FIGs. 4 and 6 indicates the radius of the hole 43 in a region opposite from the working chamber 24 across the low-pressure annular channel 37 in the axial direction (hereinafter, also referred to as "opposite region"), while R2 in FIGs. 4 and 6 indicates the radius of the hole 43 in a region on the same side of the low-pressure annular channel 37 as the working chamber 24 in the axial direction (hereinafter, also referred to as "working-chamber side region"). Furthermore, d1 in FIGs. 5 and 7 indicates the clearance between the inner peripheral surface 90A of the hole 43 and the outer peripheral surface 91A of the valve casing 44 in the opposite region, while d2 in FIGs. 5 and 7 indicates the clearance between the inner peripheral surface 90B of the hole 43 and the outer peripheral surface 91B of the valve casing 44 in the working-chamber side region.

In the respective example and embodiment depicted in FIGs. 4 and 5, and FIGs. 6 and 7, at least one of d1/R1 or d2/R2 is at least 0.04%.

As described above, in the valve casing 44, at a position closer to the working chamber 24 than the flange portion 80 is in the axial direction of the hole 43 of the valve-block body 40, the clearance d (d1 and/or d2) between the inner peripheral surface 90 of the hole 43 and the outer peripheral surface 91 of the valve casing 44 is ensured to be adequately large in relation to the radius R (R1 and/or R2) of the hole 43. Accordingly, at a position closer to the working chamber 24 than the flange portion 80 is, even if the valve casing 44 (i.e., the free end section of the cantilever structure of the valve casing 44 supported at the flange portion 80) deforms due to a bending moment generated by a pressure of the working chamber 24, the outer peripheral surface 91 of the valve casing 44 and the inner peripheral surface 90 of the hole 43 of the valve-block body 40 are less likely to be in contact with each other. Accordingly, it is possible to reduce fretting between the valve-block body 40 and the valve casing 44.

The clearance d, or the ratio d/R of the clearance d to the radius R of the hole 43, may be determined on the basis of an SN curve (a curve representing a correlation between a stress amplitude σa and a repetitive number N before breakage) of a constituent material of the valve block 38 (the valve casing 44 and the valve-block body 40).

For instance, an SN curve is generated from material-test data on a constituent material of the valve block 38 (the valve casing 44 and the valve-block body 40), and an allowable stress of the valve block 38 is obtained from the SN curve. The clearance d, or the ratio d/R of the clearance d to the radius R of the hole 43 may be determined on the basis of a displacement amount (e.g. a displacement amount relative to the valve-block body 40) in the radial direction of the valve casing 44 corresponding to an allowable stress obtained as described above.

In some embodiments, at a position closer to the working chamber 24 than the flange portion 80 is in the axial direction of the hole 43, the clearance d is at least 20µm.

For instance, in the example and the embodiment depicted in FIGs. 4 and 5, and FIGs. 6 and 7, the clearance d1 or d2 may be at least 20µm.

Taking account of the pressure condition of the working chamber 24 and the size of the valve casing of a typical fluid machine (hydraulic motor 10), it is possible to reduce fretting between the valve-block body and the valve casing effectively with the clearance d being at least 20µm.

In some embodiments, the clearance d is greater than the amount of elastic deformation of the valve casing 44 in the radial direction due to pressure change of the working chamber 24 during operation of the fluid machine (hydraulic motor 10).

Accordingly, it is possible to reduce fretting between the valve-block body 40 and the valve casing 44 effectively.

In the example for describing the features of the present invention, depicted in FIGs. 4 and 5, the valve-block body 40 includes a contact surface 84 to be in contact with a surface 82 that is the closer one to the working chamber 24 of the two end surfaces 81, 82 of the flange portion 80.

Furthermore, the fastening part 70 includes a nut member 72 having a male thread 73 to be mated with a female thread 47 formed on the hole 43 of the valve-block body 40. The nut member 72 is screwed into the hole 43 of the valve-block body 40, and thereby the valve casing 44 is fastened to the valve-block body 40.

With the fastening part 70 of the above described configuration, it is not necessary to screw the valve casing 44 into the valve-block body 40 during fastening, unlike the case where a male thread is formed on the outer peripheral surface of the valve casing 44 itself, and thereby it is possible to reduce sliding between the valve casing 44 and the valve-block body 40. Accordingly, it is possible to reduce a risk of damage to a member disposed between the valve casing 44 and the valve-block body 40 (e.g. a seal member such as an O-ring 97, 98, 99).

In the embodiment depicted in FIGs. 6 and 7, the surface 82, which is the closer one to the working chamber 24 of the two end surfaces 81, 82 of the flange portion 80, is in contact with the outer surface 86 of the valve-block body 40 on the outer peripheral surface 91 of the hole 43. Furthermore, a plurality of screw holes 92 is formed on the outer surface 86 of the valve-block body 40 so as to surround the hole 43.

Furthermore, the fastening part 70 includes a plurality of fastening bolts 94 screwed into respective screw holes 92, thus fixing the flange portion 80 to the outer surface 86 of the valve-block body 40.

As described above, the plurality of fastening bolts 94 are screwed into the screw holes 92 formed on the outer surface 86 of the valve-block body 40 to fix the flange portion 80 to the outer surface 86, and thereby it is possible to apply a relatively large axial force to the outer surface 86 of the valve-block body 40 with a relatively small fastening torque. Accordingly, it is possible to suppress loosening of the fastening part 70 for fastening the valve casing 44 and the valve-block body 40 even in a case where the pressure of the working chamber 24 becomes relatively high.

In the valve block 38 depicted in FIGs. 6 and 7, the valve casing 44 includes a cylindrical portion 96 disposed closer to the working chamber 24 than the flange portion 80, connected to the flange portion 80, and forming at least a part of the housing space 31 of the low-pressure valve 30.

A ratio (t2/t1) of the thickness t2 (see FIG. 7) in the axial direction of the flange portion 80 to the thickness t1 (see FIG. 7) in the radial direction of the cylindrical portion 96 is at least 1.5 and no more than 10.

With (t2/t1) being at least 1.5, it is possible to form the flange portion 80 with a relatively large thickness to improve rigidity of the valve block 38 as a whole, while forming the cylindrical portion 96 with a relatively small thickness to ensure the housing space 31 of the low-pressure valve 30. Further, with (t2/t1) being at least 1.5, it is possible to increase the length of the fastening bolts 94, and thereby it is possible to suppress loosening of the fastening part 70 for fastening the valve casing 44 and the valve-block body 40, and to improve fatigue strength of the fastening bolts 94. Furthermore, with (t2/t1) being no more than 10, it is possible to suppress size increase of the valve block 38.

In the valve block 38 depicted in FIGs. 6 and 7, an initial fastening force of the fastening bolts 94 may be set so that the surface 82 of the flange portion 80 does not separate from the outer surface 86 of the valve-block body 40 due to pressure change of the working chamber 24 during operation of the fluid machine (hydraulic motor 10).

In this case, it is possible to fasten the fastening part 70 with a sufficient initial fastening force, and to suppress separation of the surface 82 closer to the working chamber 24 of the flange portion 80 from the outer surface 86 of the valve-block body 40, even during operation of the fluid machine (hydraulic motor 10).

The initial fastening force of the fastening part 70 can be determined, for instance, on the basis of at least one of the maximum pressure of the working chamber 24 applied to the flange portion 80, or a chart representing a correlation between a force applied to the fastening part 70 and extension of the fastening part 70.

In some embodiments, an external device can be mounted to the valve block 38 by using at least one of the plurality of fastening bolts 94.

For instance, in the fluid machine (hydraulic motor 10) depicted in FIG. 3, one of the plurality of fastening bolts 94 is screwed into a screw hole formed through both the mounting plate 116 and the flange portion 80 to fix the flange portion 80 to the valve-block body 40 while also fixing the mounting plate 116 to the valve-block body 40. Furthermore, the low-pressure accumulator 114 is fixed to the mounting plate 116 by a bolt or the like. In other words, the low-pressure accumulator 114, which is an external device, is mounted to the valve block 38 via the mounting plate 116 by using one of the plurality of fastening bolts 94.

Accordingly, it is possible to mount an external device (e.g. the low-pressure accumulator 114) by using at least one of the plurality of fastening bolts, and thereby it is possible to save space for mounting an external device as compared to a case where a fastening member is additionally provided to mount an external device, and thus to reduce the size of the hydraulic machine (hydraulic motor 10).

In some embodiments, a section of the valve casing 44 to be received into the hole 43 of the valve-block body 40 in the axial direction has such a diameter that the difference between the maximum value and the minimum value of the diameter is no more than 500µm.

In some embodiments, the hole 43 of the valve-block body 40 has such a diameter that the difference between the maximum value and the minimum value of the diameter is no more than 500µm.

In some embodiments, in a region between the both end surfaces 86, 87 (the outer surface 86 and the end surface 87 on the opposite side) of the valve-block body in the axial direction, the difference between the maximum diameter and the minimum diameter of the hole 43 of the valve-block body 40 is no more than 500µm.

Accordingly, in the axial direction, a section of the valve casing 44 to be received by the hole 43, or the hole 43 of the valve-block body 40 has such a diameter that the difference between the maximum value and the minimum value is more than 500µm, and thereby it is possible to insert the valve casing 44 into the hole 43 of the valve-block body 40 smoothly in the axial direction.

In some embodiments, at least one of a section of the valve casing 44 to be received by the hole 43 of the valve-block body 40 in the axial direction, or a section of the hole 43 of the valve-block body 40 that receives the valve casing 44 in the axial direction has a constant diameter within a range of tolerance.

Accordingly, it is possible to insert the valve casing 44 into the hole 43 of the valve-block body 40 smoothly in the axial direction.

In some embodiments, the valve block 38 further includes a push-up bolt 104 mated with a female thread 102 disposed on the flange portion 80, and configured to push up the flange portion 80 away from the valve-block body 40 by being screwed into the female thread 102.

In some embodiments, the female thread 102 to be mated with the push-up bolt 104 may be the female thread to be mated with the fastening bolt 94.

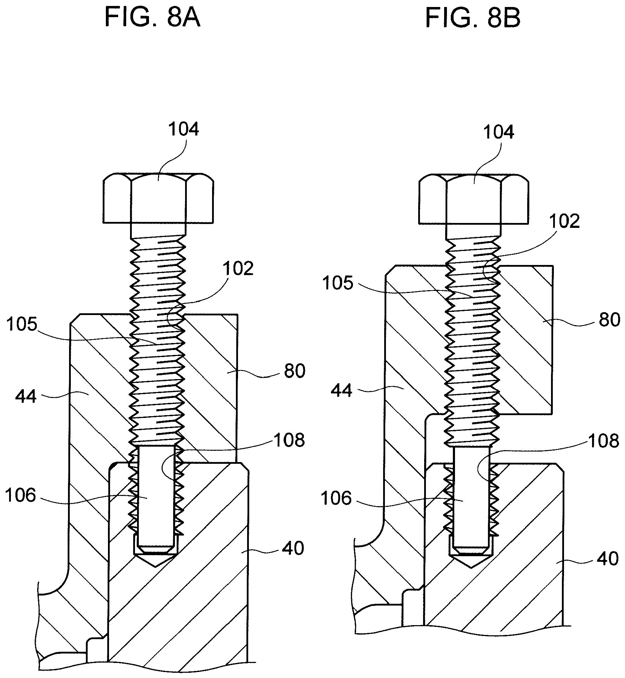

FIG. 8 is a diagram for describing uplift of the flange portion by a push-up bolt according to an embodiment.

As depicted in FIG. 8, the push-up bolt 104 according to an embodiment includes a middle section 105 of a relatively large diameter with a male thread formed thereon, and a tip portion 106 of a relatively small diameter.

For instance, as depicted in FIG. 8A, as the push-up bolt 104 is screwed in, the middle section 105 comes into engagement with the female thread 102 formed on the flange portion 80, and the tip portion 106 is inserted into the bolt hole 108 formed in the valve-block body 40. At this time, the tip portion 106 with a relatively small diameter and the bolt hole 108 are not mated with each other.

When the push-up bolt 104 is further screwed into the female thread 102 of the flange portion 80, the tip portion 106 of the push-up bolt 104 has its axial movement restricted by the bolt hole 108 formed on the valve-block body 40, while the middle section 105 moves relatively in a screwing direction with respect to the flange portion 80, as depicted in FIG. 8B. In other words, while the axial movement of the push-up bolt 104 is restricted, the flange portion 80 moves relative to the push-up bolt 104 in the axial direction, in a direction opposite to the screwing direction of the push-up bolt 104. Accordingly, the valve casing 44 including the flange portion 80 is pushed up in a direction away from the valve-block body 40.

As described above, by screwing the push-up bolt 104 into the female thread 102 formed on the flange portion 80, it is possible to push up the flange portion 80 in a direction away from the valve-block body 40, and thereby it is possible to remove the valve casing 44 and the low-pressure valve 30 received in the valve casing 44 readily from the valve-block body 40.

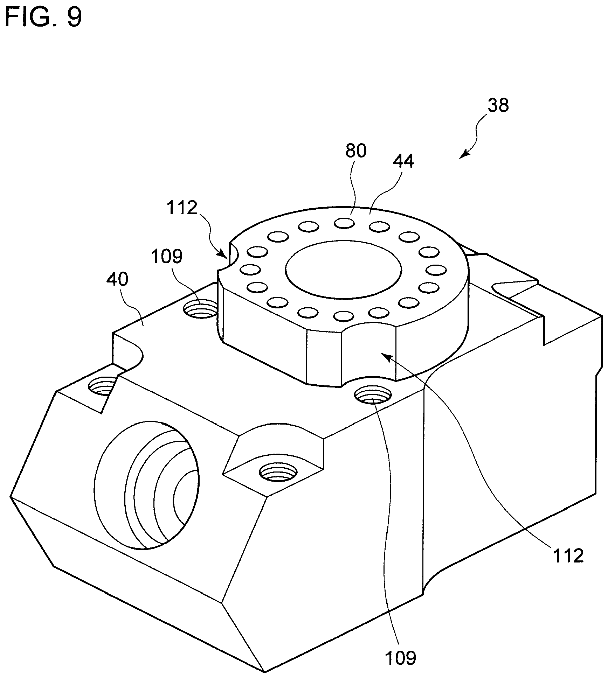

FIG. 9 is a perspective view of a valve block according to an embodiment.

In some embodiments, as depicted in FIG. 9, the flange portion 80 has a cut-out shape 112 so that the flange portion 80 does not interfere with a constituent member mounted to the valve-block body 40 or the valve casing 44. In the example depicted in FIG. 9, the cut-out shape 112 has such a shape that does not interfere with the bolt hole 109 formed on the valve-block body 40, and thus with a constituent member mounted to the bolt hole 109.

With the cut-out shape 112 of the above configuration, it is possible to mount constituent members to the valve-block body 40 or the valve casing 44 smoothly.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A valve block (38), comprising:
a valve (30) configured to be capable of opening and closing in accordance with a periodic change of a pressure of a working chamber (24) of a fluid machine (8;10);
a valve-block body (40);
a valve casing (44) disposed at least partially inside a hole (43) formed in the valve-block body (40), and including a housing space (31) for the valve (30) and a flange portion (80) protruding outward in a radial direction of the hole (43); and
a fastening part (70) configured to fasten the flange portion (80) of the valve casing (44) to the valve-block body (40), **characterized in that**
d/R is at least 0.04% at a position closer to the working chamber (24) than the flange portion (80) in an axial direction of the hole (43), where d is a clearance between an inner peripheral surface (90A,90B) of the hole (43) of the valve-block body (40) and an outer peripheral surface (91A,91B) of the valve casing (44), and R is a radius of the hole (43),
wherein a surface closer to the working chamber (24), of both end surfaces (81,82) of the flange portion (80), is in contact with an outer surface (86) of the valve-block body (40) disposed on an outer circumferential surface of the hole (43), the outer surface (86) being one of both end surfaces (86,87) of the valve-block body (40) in the axial direction, and
wherein the fastening part (70) includes a plurality of fastening bolts (94) to be screwed into a plurality of respective screw holes (92) formed so as to surround the hole (43) on the outer surface (86) of the valve-block body (40) and to fix the flange portion (80) to the outer surface (86) of the valve-block body (40).

2. The valve block (38) according to claim 1,
wherein the clearance d is at least 20µm at a position closer to the working chamber (24) than the flange portion (80) in an axial direction of the hole (43).

3. The valve block (38) according to claim 1 or 2,
wherein the clearance d is greater than an amount of elastic deformation of the valve casing (44) in the radial direction due to pressure change in the working chamber (24) during operation of the fluid machine.

4. The valve block (38) according to any one of claims 1 to 3,
wherein the valve casing (44) comprises a cylindrical portion (96) disposed closer to the working chamber (24) than the flange portion (80) and connected to the flange portion (80), the cylindrical portion (96) forming at least a part of the housing space (31) of the valve, and
wherein a ratio (t2/t1) of a thickness t2 in the axial direction of the flange portion (80) to a thickness t1 in the radial direction of the cylindrical portion (96) is at least 1.5 and no more than 10.

5. The valve block (38) according to any one of claims 1 to 4,
wherein an initial fastening force of the plurality of fastening bolts (94) is set so that the surface of the flange portion (80) does not separate from the outer surface (86) of the valve-block body (40) due to pressure change of the working chamber (24) during operation of the fluid machine.

6. The valve block (38) according to any one of claims 1 to 5 configured such that an external device (114) is mountable to the valve block (38) by using at least one of the plurality of fastening bolts (94).

7. The valve block (38) according to any one of claims 1 to 6,
wherein a section of the valve casing (44) to be received in the hole (43) of the valve-block body (40) in the axial direction has such a diameter that a difference between a maximum diameter and a minimum diameter is at most 500µm. v

8. The valve block (38) according to any one of claims 1 to 7, wherein the hole (43) of the valve-block body (40) has such a diameter that a difference between a maximum diameter and a minimum diameter is at most 500µm.

9. The valve block (38) according to any one of claims 1 to 8,
wherein at least one of a section of the valve casing (44) to be received in the hole (43) of the valve-block body (40) in the axial direction, or a section of the hole (43) of the valve-block body (40) to receive the valve casing (44) in the axial direction has a constant diameter within a tolerance.

10. The valve block (38) according to any one of claims 1 to 9, further comprising a push-up bolt (104) configured to be mated with a female thread (102) formed on the flange portion (80) and to push up the flange portion (80) in a direction away from the valve-block body (40) by being screwed into the female thread (102).

11. The valve block (38) according to any one of claims 1 to 10,
wherein the flange portion (80) includes a cut-out shape (112) so as not to interfere with a constituent member mounted to the valve-block body (40) or the valve casing (44) .

12. The valve block (38) according to any one of claims 1 to 11,
wherein the valve (30) comprises:
a rod (60) having a first end portion and a second end portion;
a valve-body unit (64) joined to the first end portion of the rod (60) and having at least a valve body (65) capable of being in contact with a valve seat (39) formed on the valve casing (44);
an armature (66) joined to the second end portion of the rod (60);
a biasing member (68) configured to bias the armature (66) in a biasing direction; and
an electromagnet (69) configured to attract the armature (66) to drive the armature (66) in a direction opposite to the biasing direction when supplied with electric power, and
wherein the valve casing (44) comprises:
an inner channel (27) for permitting the working chamber (24) and an external piping (12,14) to be in communication when the valve (30) is open;
a rod insertion hole (46) through which the second end portion of the rod (60) is capable of passing; and
an electromagnet housing space (48) for housing the electromagnet (69).

13. A fluid machine (8;10), comprising:
a cylinder (20);
a piston (22) configured to be capable of reciprocating inside the cylinder (20); and
the valve block (38) according to any one of claims 1 to 12,
wherein the working chamber (24) is defined by the cylinder (20) and the piston (22), and
wherein the valve (30) is configured to be capable of switching inflow of a fluid to the working chamber (24) or outflow of a fluid from the working chamber (24).

14. A renewable energy power generating apparatus, comprising:
a rotor (3) configured to receive renewable energy to rotate;
a hydraulic pump (8) configured to be driven by the rotor (3) to pressurize working oil;
a hydraulic motor (10) configured to be driven by the working oil pressurized by the hydraulic pump (8);
a high-pressure line (12) connecting an outlet of the hydraulic pump (8) and an inlet of the hydraulic motor (10);
a low-pressure line (14) connecting an outlet of the hydraulic motor (10) and an inlet of the hydraulic pump (8); and
a generator (16) configured to be driven by the hydraulic motor (10),
wherein at least one of the hydraulic pump (8) or the hydraulic motor (10) is the fluid machine (8;10) according to claim 13, and
wherein the valve (30) is configured to be capable of switching a communication state between the working chamber (24) and the high-pressure line (12) or the low-pressure line (14) .

## Patentansprüche

1. Ein Ventilblock (38) mit:
einem Ventil (30), das konfiguriert ist, um gemäß einer periodischen Änderung eines Drucks einer Arbeitskammer (24) einer Fluidmaschine (8;10) öffnen und schließen zu können,
einem Ventilblockkörper (40),
einem Ventilgehäuse (44), das zumindest teilweise im Inneren eines Lochs (43) angeordnet ist, das in dem Ventilblockkörper (40) ausgebildet ist, und einen Gehäuseraum (31) für das Ventil (30) sowie einen Flanschabschnitt (80), der in einer Radialrichtung des Lochs (43) nach außen vorsteht, aufweist, und
einem Befestigungsteil (70), das konfiguriert ist, um den Flanschabschnitt (80) des Ventilgehäuses (44) an dem Ventilblockkörper (40) zu befestigen,
**dadurch gekennzeichnet, dass**
d/R zumindest 0,04% an einer Position beträgt, die näher bei der Arbeitskammer (24) ist als der Flanschabschnitt (80) in einer Axialrichtung des Lochs (43), wobei d ein Zwischenraum zwischen einer Innenumfangsoberfläche (90A,90B) des Lochs (43) des Ventilblockkörpers (40) und einer Außenumfangsoberfläche (91A,91B) des Ventilgehäuses (44) ist, und R ein Radius des Lochs (43) ist,
wobei eine Oberfläche näher bei der Arbeitskammer (24) von beiden Endoberflächen (81,82) des Flanschabschnitts (80) in Kontakt mit einer äußeren Oberfläche (86) des Ventilblockkörpers (40) ist, der an einer äußeren Umfangsoberfläche des Lochs (43) angeordnet ist, wobei die äußere Oberfläche (86) eine von beiden Endoberflächen (86,87) des Ventilblockkörpers (40) in der Axialrichtung ist, und
wobei das Befestigungsteil (70) eine Vielzahl von Befestigungsbolzen (94) aufweist, die in eine Vielzahl von jeweiligen Schraubenlöchern (92) einzuschrauben sind, die so ausgebildet sind, dass sie das Loch (43) an der äußeren Oberfläche (86) des Ventilblockkörpers (40) umgeben, und um den Flanschabschnitt (80) an der äußeren Oberfläche (86) des Ventilblockkörpers (40) zu befestigen.

2. Der Ventilblock (38) gemäß Anspruch 1,
wobei der Zwischenraum d zumindest 20µm an einer Position näher bei der Arbeitskammer (24) als der Flanschabschnitt (80) in einer Axialrichtung des Lochs (43) beträgt.

3. Der Ventilblock (38) gemäß Anspruch 1 oder 2,
wobei der Zwischenraum d größer ist als ein Betrag einer elastischen Verformung des Ventilgehäuses (44) in der Radialrichtung aufgrund einer Druckänderung in der Arbeitskammer (24) während des Betriebs der Fluidmaschine.

4. Der Ventilblock (38) gemäß einem der Ansprüche 1 bis 3,
wobei das Ventilgehäuse (44) einen zylindrischen Abschnitt (96) aufweist, der näher bei der Arbeitskammer (24) angeordnet ist als der Flanschabschnitt (80) und der mit dem Flanschabschnitt (80) verbunden ist, wobei der zylindrische Abschnitt (96) zumindest ein Teil des Gehäuseraums (31) des Ventils bildet, und
wobei ein Verhältnis (t2/t1) einer Dicke t2 in der Axialrichtung des Flanschabschnitts (80) zu einer Dicke t1 in der Radialrichtung des zylindrischen Abschnitts (96) zumindest 1,5 und nicht mehr als 10 beträgt.

5. Der Ventilblock (38) gemäß einem der Ansprüche 1 bis 4,
wobei eine anfängliche Befestigungskraft der Vielzahl von Befestigungsbolzen (94) so eingestellt ist, dass die Oberfläche des Flanschabschnitts (80) sich nicht von der äußeren Oberfläche (86) des Ventilblockkörpers (40) aufgrund einer Druckänderung der Arbeitskammer (24) während des Betriebs der Fluidmaschine trennt.

6. Der Ventilblock (38) gemäß einem der Ansprüche 1 bis 5, der so konfiguriert ist, dass eine externe Vorrichtung (114) an dem Ventilblock (38) unter Verwendung von zumindest einem von der Vielzahl von Befestigungsbolzen (94) anbringbar ist.

7. Der Ventilblock (38) gemäß einem der Ansprüche 1 bis 6,
wobei ein Abschnitt des Ventilgehäuses (44), der in dem Loch (43) des Ventilblockkörpers (40) in der Axialrichtung aufzunehmen ist, einen solchen Durchmesser besitzt, dass eine Differenz zwischen einem maximalen Durchmesser und einem minimalen Durchmesser höchstens 500µm beträgt.

8. Der Ventilblock (38) gemäß einem der Ansprüche 1 bis 7, wobei das Loch (43) des Ventilblockkörpers (40) einen solchen Durchmesser besitzt, dass eine Differenz zwischen einem maximalen Durchmesser und einem minimalen Durchmesser höchstens 500µm beträgt.

9. Der Ventilblock (38) gemäß einem der Ansprüche 1 bis 8,
wobei zumindest einer von einem Abschnitt des Ventilgehäuses (44), der in dem Loch (43) des Ventilblockkörpers (40) in der Axialrichtung aufzunehmen ist, oder einem Abschnitt des Lochs (43) des Ventilblockkörpers (40), der das Ventilgehäuse (44) in der Axialrichtung aufnehmen soll, einen konstanten Durchmesser innerhalb einer Toleranz besitzt.

10. Der Ventilblock (38) gemäß einem der Ansprüche 1 bis 9, ferner mit einem Hochdrückbolzen (104), der konfiguriert ist, um mit einem weiblichen Gewinde (102) zusammengepasst zu werden, das an dem Flanschabschnitt (80) ausgebildet ist, und um den Flanschabschnitt (80) in einer Richtung weg von dem Ventilblockkörper (40) hochzudrücken, indem er in das weibliche Gewinde (102) eingeschraubt wird.

11. Der Ventilblock (38) gemäß einem der Ansprüche 1 bis 10, wobei der Flanschabschnitt (80) eine Ausschnittform (112) so aufweist, dass er nicht mit einem Bestandselement kollidiert, das an dem Ventilblockkörper (40) oder dem Ventilgehäuse (44) angebracht ist.

12. Der Ventilblock (38) gemäß einem der Ansprüche 1 bis 11, wobei das Ventil (30) aufweist:
einen Stab (60) mit einem ersten Endabschnitt und einem zweiten Endabschnitt,
eine Ventilkörpereinheit (64), die mit dem ersten Endabschnitt des Stabs (60) verbunden ist und zumindest einen Ventilkörper (65) besitzt, der in Kontakt mit einem Ventilsitz (39) sein kann, der an dem Ventilgehäuse (44) ausgebildet ist,
eine Armatur (66), die mit dem zweiten Endabschnitt des Stabs (60) verbunden ist,
ein Vorbelastungselement (68), das konfiguriert ist, um die Armatur (66) in einer Vorbelastungsrichtung vorzubelasten, und
einen Elektromagnet (69), der konfiguriert ist, um die Armatur (66) zum Antreiben der Armatur (66) in einer Richtung entgegengesetzt zu der Vorbelastungsrichtung anzuziehen, wenn er mit elektrischem Strom versorgt wird, und
wobei das Ventilgehäuse (44) aufweist:
einen inneren Kanal (27) zum Zulassen, dass die Arbeitskammer (24) und eine externe Rohrleitung (12,14) in Verbindung sind, wenn das Ventil (30) offen ist,
ein Stabeinsetzloch (46), durch das der zweite Endabschnitt des Stabs (60) passieren kann, und
einen Elektromagnet-Gehäuseraum (48) zum Aufnehmen des Elektromagneten (69).

13. Eine Fluidmaschine (8;10) mit:
einem Zylinder (20),
einem Kolben (22), der konfiguriert ist, um sich im Inneren des Zylinders (20) hin-und-her zu bewegen, und
dem Ventilblock (38) gemäß einem der Ansprüche 1 bis 12,
wobei die Arbeitskammer (24) durch den Zylinder (20) und den Kolben (22) definiert ist, und
wobei das Ventil (30) konfiguriert ist, um eine Einströmung eines Fluids in die Arbeitskammer (24) oder eine Ausströmung eines Fluids aus der Arbeitskammer (24) umschalten zu können.

14. Eine Stromerzeugungsvorrichtung für erneuerbare Energie, mit:
einem Rotor (3), der konfiguriert ist, um erneuerbare Energie zur Drehung zu empfangen,
einer hydraulischen Pumpe (8), die konfiguriert ist, um durch den Rotor (3) zum Druckbeaufschlagen von Arbeitsöl angetrieben zu werden,
einem hydraulischen Motor (10), die konfiguriert ist, um durch das durch die hydraulische Pumpe (8) mit Druck beaufschlagte Arbeitsöl angetrieben zu werden,
einer Hochdruckleitung (12), die einen Auslass der hydraulischen Pumpe (8) und einen Einlass des hydraulischen Motors (10) verbindet,
einer Niederdruckleitung (14), die einen Auslass des hydraulischen Motors (10) und einen Einlass der hydraulischen Pumpe (8) verbindet, und
einem Generator (16), der konfiguriert ist, um durch den hydraulischen Motor (10) angetrieben zu werden,
wobei zumindest eine von der hydraulischen Pumpe (8) oder dem hydraulischen Motor (10) die Fluidmaschine (8;10) gemäß Anspruch 13 ist, und
wobei das Ventil (30) konfiguriert ist, um einen Verbindungszustand zwischen der Arbeitskammer (24) und der Hochdruckleitung (12) oder der Niederdruckleitung (14) umschalten zu können.

## Revendications

1. Bloc (38) de vanne, comprenant :
une vanne (30), configurée pour être capable de s'ouvrir et de se fermer en fonction d'un changement périodique d'une pression dans une chambre (24) de travail d'une machine (8 ; 10) à fluide ;
un corps (40) de bloc de vanne ;
une enveloppe (44) de vanne, disposée, au moins en partie, à l'intérieur d'un trou (43) formé dans le corps (40) de bloc de vanne et comprenant un espace (31) de logement de la vanne (30) et une partie (80) de rebord, faisant saillie vers l'extérieur dans une direction radiale du trou (43) et
une partie (70) de fixation, configurée pour fixer la partie (80) de rebord de l'enveloppe (44) de vanne au corps (40) de bloc de vanne, **caractérisé en ce que**
d/R est au moins égal à 0,04% en une position plus proche de la chambre (24) de travail que la partie (80) de rebord dans une direction axiale du trou (43), d étant un jeu entre une surface (90A, 90B) périphérique intérieure du trou (43) du corps (40) de bloc de vanne et une surface (91A, 91B) périphérique extérieure de l'enveloppe (44) de vanne, et R étant un rayon du trou (43),
dans lequel une surface plus proche de la chambre (24) de travail, des deux surfaces (81, 82) d'extrémité de la partie (80) de rebord, est en contact avec une surface (86) extérieure du corps (40) de bloc de vanne, disposée sur une surface circonférentielle extérieure du trou (43), la surface (86) extérieure étant l'une des deux surfaces (86, 87) du corps (40) de bloc de vanne dans la direction axiale et
dans lequel la partie (70) de fixation comprend une pluralité de boulons (94) de fixation à visser dans une pluralité de taraudages (92) respectifs, formés de manière à entourer le trou (43) sur la surface (86) extérieure du corps (40) de bloc de vanne et à fixer la partie (80) de rebord à la surface (86) extérieure du corps (40) de bloc de vanne.

2. Bloc (38) de vanne suivant la revendication 1,
dans lequel le jeu d est d'au moins 20 µm, en une position plus proche de la chambre (24) de travail que de la partie (80) de rebord dans une direction axiale du trou (43).

3. Bloc (38) de vanne suivant la revendication 1 ou 2,
dans lequel le jeu d est plus grand qu'une valeur d'une déformation élastique de l'enveloppe (44) de vanne dans la direction radiale, due à un changement de pression dans la chambre (24) de travail pendant un fonctionnement de la machine à fluide.

4. Bloc (38) de vanne suivant l'une quelconque des revendications 1 à 3,
dans lequel l'enveloppe (44) de vanne comprend une partie (96) cylindrique, disposée plus près de la chambre (24) de travail que de la partie (80) de rebord et reliée à la partie (80) de rebord, la partie (96) cylindrique formant au moins une partie de l'espace (31) de logement de la vanne et
dans lequel un rapport (t2/t1), d'une épaisseur t2 dans la direction axiale de la partie (80) de rebord à une épaisseur (t1) dans la direction radiale de la partie (96) cylindrique, est d'au moins 1,5 et n'est pas supérieur à 10.

5. Bloc (38) de vanne suivant l'une quelconque des revendications 1 à 4,
dans lequel une force initiale de fixation de la pluralité de boulons (94) de fixation est réglée de manière à ce que la surface de la partie (80) de rebord ne se sépare pas de la surface (86) extérieure du corps (40) de bloc de vanne, en raison d'un changement de pression dans la chambre (24) de travail pendant un fonctionnement de la machine à fluide.

6. Bloc (38) de vanne suivant l'une quelconque des revendications 1 à 5, configuré de manière à ce qu'un dispositif (114) extérieur puisse être monté sur le bloc (38) de vanne, en utilisant au moins l'un de la pluralité de boulons (94) de fixation.

7. Bloc (38) de vanne suivant l'une quelconque des revendications 1 à 6,
dans lequel une section de l'enveloppe (44) de vanne à recevoir dans le trou (43) du corps (40) de bloc de vanne, dans la direction axiale, à un diamètre tel qu'une différence entre un diamètre maximum et un diamètre minimum est au plus de 500 µm.

8. Bloc (38) de vanne suivant l'une quelconque des revendications 1 à 7, dans lequel le trou (43) du corps (40) de bloc de vanne a un diamètre tel qu'une différence entre un diamètre maximum et un diamètre minimum est au plus de 500 µm.

9. Bloc (38) de vanne suivant l'une quelconque des revendications 1 à 9,
dans lequel au moins une section de l'enveloppe (44) de vanne à recevoir dans le trou (43) du corps (40) de bloc de vanne, dans la direction axiale, ou une section du trou (43) du corps (40) de bloc de vanne pour recevoir l'enveloppe (44) de vanne, dans la direction axiale, a un diamètre constant aux tolérances près.

10. Bloc (38) de vanne suivant l'une quelconque des revendications 1 à 9, comprenant, en outre, un boulon (104) de poussée, configuré pour être en correspondance avec un taraudage (102), formé dans la partie (80) de rebord, et pour pousser la partie (80) de rebord dans une direction l'éloignant du corps (40) de bloc de vanne, en étant vissé dans le taraudage (102).

11. Bloc (38) de vanne suivant l'une quelconque des revendications 1 à 10,
dans lequel la partie (80) de rebord comprend une forme (112) tronquée, de manière à ne pas interférer avec un élément constitutif monté sur le corps (40) de bloc de vanne ou l'enveloppe (44) de vanne.

12. Bloc (38) de vanne suivant l'une quelconque des revendications 1 à 11,
dans lequel la vanne (30) comprend :
une tige (60), ayant une première partie d'extrémité et une seconde partie d'extrémité ;
une unité (64) de corps de vanne, jointe à la première partie d'extrémité de la tige (60) et ayant au moins un obturateur (65) de vanne apte à être en contact avec un siège (39) de vanne formé sur l'enveloppe (44) de vanne ;
une armature (66), jointe à la deuxième partie d'extrémité de la tige (60) ;
un élément (68) de poussée, configuré pour pousser l'armature (66) dans une direction de poussée et
un électroaimant (69), configuré pour attirer l'armature (66), pour entraîner l'armature (66) dans un sens contraire au sens de poussée, lorsqu'il est alimenté en courant électrique et
dans lequel l'enveloppe (44) de vanne comprend :
un canal (27) intérieur, pour permettre à la chambre (24) de travail et à une canalisation (12, 14) extérieure d'être en communication, lorsque la vanne (30) est ouverte ;
un trou (46) d'insertion de tige, dans lequel la seconde partie d'extrémité de la tige (60) peut passer et
un espace (48) de logement d'un électroaimant, pour loger l'électroaimant (69).

13. Machine (8 ; 10) à fluide, comprenant :
un cylindre (20) ;
un piston (22), configuré pour être capable d'aller et venir à l'intérieur du cylindre (20) et
le bloc (38) de vanne suivant l'une quelconque des revendications 1 à 12,
dans lequel la chambre (24) de travail est définie par le cylindre (20) et par le piston (22) et
dans lequel la vanne (30) est configurée pour être capable de passer d'une entrée d'un fluide dans la chambre (24) de travail à une sortie d'un fluide de la chambre (24) de travail.

14. Installation de production d'électricité à énergie renouvelable, comprenant :
un rotor (3), configuré pour recevoir de l'énergie renouvelable, afin de tourner ;
une pompe (8) hydraulique, configurée pour être entraînée par le rotor (3), pour mettre de l'huile de travail sous pression ;
un moteur (10) hydraulique, configuré pour être entraîné par l'huile de travail mise sous pression par la pompe (8) hydraulique ;
une ligne (12) de haute pression mettant une sortie de la pompe (8) hydraulique en communication avec une entrée du moteur (10) hydraulique ;
une ligne (14) de basse pression mettant une sortie du moteur (10) hydraulique en communication avec une entrée de la pompe (8) hydraulique et
une génératrice (16), configurée pour être entraînée par le moteur (10) hydraulique,
dans laquelle au moins l'un de la pompe (8) hydraulique ou du moteur (10) hydraulique est la machine (8 ;10) à fluide suivant la revendication 13 et
dans lequel la vanne (30) et configurée pour être capable de commuter un état de communication entre la chambre (24) de travail et la ligne (12) de haute pression ou la ligne (14) de basse pression.
